# EUROPEAN PATENT APPLICATION

(11) **EP 3 393 154 A1**
(43) Date of publication of application: **24.10.2018**
(21) Application number: 17788593.6
(22) Date of filing: 29.03.2017
(51) Int. Cl.: H04W 4/24, H04L 12/14, H04M 15/00

(54) **QUOTA SHARING METHOD AND SIGNALING ROUTE DEVICE**

(30) Priority: 25.04.2016 CN 201610263752
(71) Applicant: Huawei Technologies Co., Ltd., Longgang District Shenzhen, Guangdong 518129 (CN)
(72) Inventor: CHEN, Wei, Shenzhen Guangdong 518129 (CN); YAN, Shizhuan, Shenzhen Guangdong 518129 (CN)
(74) Representative: Pfenning, Meinig & Partner mbB
(86) International application number: PCT/CN2017/078586
(87) International publication number: WO 2017/185940

(57) **Abstract**

The present invention relates to the communications field, and provides a quota sharing method and a signaling routing device, so as to implement quota sharing between a plurality of users in a scenario in which a plurality of PCRFs cannot communicate with each other. The quota sharing method includes: a signaling routing device receives shared information data (indicating sharing relationship information, a correspondence between an identifier of a primary user and a first charging device corresponding to the primary user, and a correspondence between an identifier of a shared user and a second charging device corresponding to the shared user, and the sharing relationship information indicates that the primary user and the shared user share a same quota) ;the signal routing device receives a session establishment request from the shared user forwarded by a session management gateway; the signal routing device queries the shared information data, and determines, based on the identifier of the shared user, that a charging device corresponding to the shared user is the first charging device; and the signal routing device routes the session establishment request to the first charging device, so that the first charging device establishes a first session between the first charging device and the signaling routing device, and the primary user and the shared user share a shared quota.

## Description

This application claims priority to Chinese Patent Application No. 201610263752.6, filed with the Chinese Patent Office on April 25, 2016 and entitled "QUOTA SHARING METHOD AND SIGNALING ROUTING DEVICE", which is incorporated herein by reference in its entirety.

### TECHNICAL FIELD

The present invention relates to the communications field, and in particular, to a quota sharing method and a signaling routing device.

### BACKGROUND

With a gradual increase of persons benefiting from communications services, a quota sharing service is derived, where a quota may be traffic, call duration, or the like. The quota sharing service is a charging solution in which a primary user bears quota charges, and the primary user and a plurality of shared users jointly use a quota.

Currently, if a quota sharing service between different users needs to be implemented, that users correspond to a same charging device such as a policy and charging rules function (English full name: Policy and Charging Rules Function, PCRF for short) or an online charging system (English full name: Online Charging System, OCS for short) needs to be ensured.

A plurality of users may correspond to a plurality of PCRFs (or OCSs), a session management gateway (PDN Gateway, PGW) routes session establishment requests of users to different PCRFs, and then the users are charged by the different PCRFs. As a result, a quota sharing service between these users cannot be implemented.

### SUMMARY

Embodiments of the present invention provide a quota sharing method and a signaling routing device, so as to implement quota sharing between a plurality of users in a scenario in which a plurality of PCRFs cannot communicate with each other.

To achieve the foregoing objective, the embodiments of the present invention use the following technical solutions.

In the prior art, a session management gateway PGW is mainly responsible for session and bearer management, IP address assignment, and the like. The PGW receives session establishment requests of users, and directly routes the session establishment requests of the users to PCRFs (charging devices) corresponding to the users, and the respective PCRFs corresponding to the users charge quotas used by the users. In this application, a signaling routing device SPS is introduced in conventional networking, aiming to redirect session requests of users based on a sharing relationship between the users, so as to implement a quota sharing service. Details are as follows:

According to a first aspect, a quota sharing method is disclosed, and includes the following steps.

First, after a quota sharing service between users is set, a signaling routing device receives related data configured by an administrator, that is, the shared information data. The shared information data herein indicates sharing relationship information, a correspondence between an identifier of a primary user and a first charging device corresponding to the primary user, and a correspondence between an identifier of a shared user and a second charging device corresponding to the shared user, and the sharing relationship information indicates that the primary user and the shared user share a same quota. For example, the shared information data may be "primary user A: PCRF 1; shared user B: PCRF 2; and sharing relationship information: the user A is the primary user, the user B is the shared user, and the two users share 2G traffic ".

Secondly, when the shared user initiates a session request, a session management gateway (PGW) receives a session establishment request of the shared user, and forwards the session establishment request of the shared user to the signaling routing device. Herein, the session establishment request carries the identifier of the shared user. Certainly, the session management gateway receives a session establishment request of another user (such as the primary user or another shared user), and also forwards the session establishment request of the user to the signaling routing device.

Then, the signaling routing device queries the pre-stored shared information data, and determines that the user is a shared user, and the shared user needs to share a same quota with a primary user. Therefore, the PCRF of the primary user, that is, the first charging device needs to be used as a charging device for the shared user. Specifically, the shared information data may be queried based on the identifier of the user, and it is determined that the user is a shared user. For example, based on the shared information data, the signaling routing device first queries the shared information data, determines that the quota sharing service is set for the user B and the primary user is A, and then determines that the charging device corresponding to the user B is the charging device for the primary user A.

Finally, the signaling routing device routes the session establishment request to the first charging device, so that the first charging device establishes a first session between the first charging device and the signaling routing device, and the primary user and the shared user share a shared quota.

In the prior art, a plurality of users correspond to a plurality of different charging devices, a PGW routes session establishment request of users to different PCRFs, and then the users are charged by the different PCRFs. In this way, a same charging device cannot charge quotas used by different users, and then a charging solution in which a primary user and a plurality of shared users jointly use a quota, that is, quota sharing cannot be implemented.

In the present invention, an SPS is introduced in conventional networking, and related data recording a sharing service is stored in the SPS in advance. When receiving a session establishment request of a user forwarded by a PGW, the SPS may query pre-recorded data to determine whether the user is a user for which a quota sharing service is set, further determine, if a quota sharing service is set for the user, that the charging device for a current session of the user is the charging device corresponding to a primary user, and subsequently route the session establishment request of the user to the charging device corresponding to the primary user, so that the charging device corresponding to the primary user charges a quota used by the user, to implement a charging solution in which the user and the primary user share a same quota.

With reference to the first aspect, in a first possible implementation of the first aspect,
if sharing service is canceled, that is, if the signaling routing device determines that a quota sharing service between the primary user and the shared user satisfies a revocation condition, the second charging device is used as a charging device for the shared user.

That is, if the sharing service is revoked, the shared user cannot continue to use a quota paid by the primary user, and the charging device for the shared user needs to charge a quota used by the shared user itself. Therefore, a charging device corresponding to a current session of the shared user needs to be used as a charging device corresponding to the shared user.

With reference to the first possible implementation manner of the first aspect, in a second possible implementation of the first aspect, the method further includes the following step.

The signaling routing device sends a session deletion message to the first charging device, so that the first device deletes a current session between the first charging device and the shared user, that is, the first session.

Additionally, a session establishment request is further sent to the second charging device, so that the second charging device establishes a second session between the second charging device and the signaling routing device, and the second session has a same session identifier as the first session.

In this way, the session management gateway PGW determines, based on the session identifier, that the current session of the shared user is still an original session, and a service interruption phenomenon does not occur.

With reference to the first possible implementation manner of the first aspect, in a second possible implementation of the first aspect, the signaling routing device sends session change information to the session management gateway and sends a session establishment request to the second charging device. The session management gateway receives the session change information and then sends a session deletion message to the first charging device, and the first charging device deletes the first session. Then, the second charging device receives the session establishment request sent by the session management gateway, and establishes a second session between the second charging device and the signaling routing device. The second session has a same session identifier as the first session.

Similarly, the session management gateway PGW determines, based on the session identifier, that the current session of the shared user is still an original session, and a service interruption phenomenon does not occur.

With reference to the first possible implementation manner of the first aspect, in a fourth possible implementation of the first aspect, the method further includes the following step.

The signaling routing device receives a session establishment request from the shared user forwarded by the session management gateway, and routes the session establishment request to the second charging device. That is, after the sharing service is revoked, the signaling routing device forwards the session request of the shared user to the charging device corresponding to the user itself.

With reference to any one of the first to the fourth possible implementations of the first aspect, in a fifth possible implementation of the first aspect, the revocation condition is: a sharing relationship between the primary user and the shared user is removed, or available usage of the shared quota is zero, that is, the shared quota is used up.

According to a second aspect, a signaling routing device is disclosed, including:
a receiving unit, configured to receive shared information data, where the shared information data indicates sharing relationship information, a correspondence between an identifier of a primary user and a first charging device corresponding to the primary user, and a correspondence between an identifier of a shared user and a second charging device corresponding to the shared user, and the sharing relationship information indicates that the primary user and the shared user share a same quota; and
the receiving unit is further configured to receive a session establishment request from the shared user forwarded by a session management gateway, where the session establishment request carries the identifier of the shared user;
a query unit, configured to query the shared information data, and determine, based on the identifier of the shared user, that a charging device corresponding to the shared user is a first charging device; and
a sending unit, configured to route the session establishment request to the first charging device, so that the first charging device establishes a first session between the first charging device and the signaling routing device, and the primary user and the shared user share a shared quota.

In the prior art, a plurality of users correspond to a plurality of different charging devices, a PGW routes session establishment request of users to different PCRFs, and then the users are charged by the different PCRFs. In this way, a same charging device cannot charge quotas used by different users, and then a charging solution in which a primary user and a plurality of shared users jointly use a quota, that is, quota sharing cannot be implemented.

In the present invention, an SPS is introduced in conventional networking, and related data recording a sharing service is stored in the SPS in advance. When receiving a session establishment request of a user forwarded by a PGW, the SPS may query pre-recorded data to determine whether the user is a user for which a quota sharing service is set, further determine, if a quota sharing service is set for the user, that the charging device for a current session of the user is the charging device corresponding to a primary user, and subsequently route the session establishment request of the user to the charging device corresponding to the primary user, so that the charging device corresponding to the primary user charges a quota used by the user, to implement a charging solution in which the user and the primary user share a same quota.

With reference to the second aspect, in a first possible implementation of the second aspect, the signaling routing device further includes a determining unit.

The determining unit is configured to: if it is determined that a quota sharing service between the primary user and the shared user satisfies a revocation condition, use the second charging device as a charging device for the shared user.

With reference to the first possible implementation of the second aspect, in a third possible implementation of the second aspect,
the sending unit is further configured to send a session deletion message to the first charging device, so that the first charging device deletes the first session; and
send the session establishment request to the second charging device, so that the second charging device establishes a second session between the second charging device and the signaling routing device, where the second session has a same session identifier as the first session.

With reference to the first possible implementation of the second aspect, in a third possible implementation of the second aspect,
the sending unit is further configured to send session change information to the session management gateway and send the session establishment request to the second charging device, so that the first charging device deletes the first session, and the second charging device establishes a second session between the second charging device and the signaling routing device, where the second session has a same session identifier as the first session.

With reference to the first possible implementation of the second aspect, in a fourth possible implementation of the second aspect,
the receiving unit is further configured to receive the session establishment request from the shared user forwarded by the session management gateway; and
the sending unit is further configured to route the session establishment request to the second charging device.

With reference to any one of the first to the fourth possible implementations of the second aspect, in a fifth possible implementation of the second aspect,
the revocation condition is: a sharing relationship between the primary user and the shared user is removed, or available usage of the shared quota is zero.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of conventional session routing;
FIG. 2 is a schematic diagram of communications networking according to an embodiment of the present invention;
FIG. 3 is a schematic diagram of a quota sharing method according to an embodiment of the present invention;
FIG. 4 is a schematic flowchart of a quota sharing method according to Embodiment 1 of the present invention;
FIG. 5 is a schematic flowchart of a method for implementing a session without interruption when a sharing service is revoked according to Embodiment 1 of the present invention;
FIG. 6 is a schematic flowchart of another method for implementing a session without interruption when a sharing service is revoked according to Embodiment 1 of the present invention;
FIG. 7 is a structural block diagram of a signaling routing device according to Embodiment 2 of the present invention; and
FIG. 8 is another structural block diagram of a signaling routing device according to Embodiment 2 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

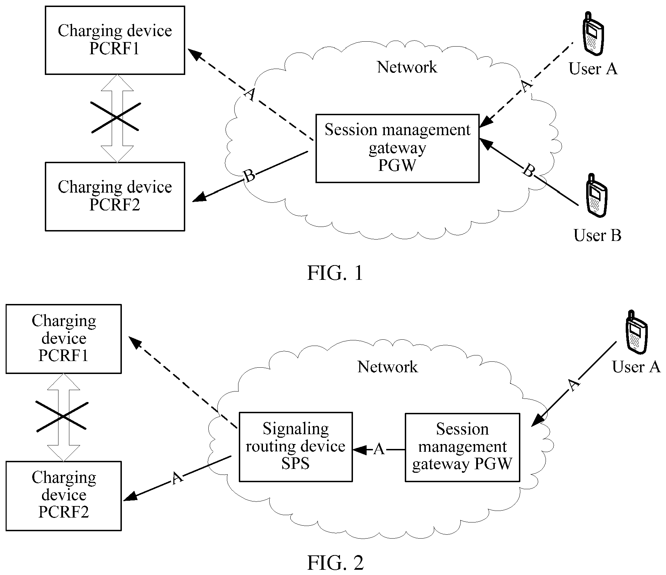

In the prior art, when different users correspond to different PCRFs (or OCSs), a PGW in networking routes session requests of the different users to the different PCRFs. As a result, a quota sharing service cannot be implemented. Specifically, a conventional session routing process is shown in FIG. 1. A user A corresponds to a PCRF 1, a user B corresponds to a PCRF 2, and a PGW routes a session request of the user A to the PCRF 1, and routes a session request of the user B to the PCRF 2. Because the PCRF 1 and the PCRF 2 cannot communicate with each other (for example, the PCRF 1 and the PCRF 2 are from different manufacturers), the user A and the user B cannot perform charging by using one PCRF, that is, cannot implement a service of sharing a same quota.

The present invention provides a type of communications networking, as shown in FIG. 2, including: a session management gateway, a signaling routing device, and at least two different charging devices. The session management gateway may be a PGW (PDN Gateway, PDN session management gateway), configured to forward a request of a user to the signaling routing device. The signaling routing device may be an SPS (signaling service processing system (Signaling service Processing System)) device, pre-recording related data of a sharing service, that is, shared information data described in the present invention. The charging device may be a PCRF. Different from the prior art, a signaling routing device SPS is introduced in the communications networking provided in the present invention, aiming to redirect session requests of users based on a sharing relationship between the users, so as to implement a quota sharing service. In the communications networking shown in FIG. 2, the signaling routing device may redirect a session establishment request of a user to a charging device that does not correspond to the user. For example, a user A corresponds to a PCRF 1, and the signaling routing device receives a session establishment request of the user A forwarded by the session management gateway, and routes the session establishment request to a PCRF 2.

Based on this, an embodiment of the present invention provides a signaling routing device, aiming to redirect a session establishment request of a user, so as to implement quota sharing between a plurality of users in a scenario in which a plurality of PCRFs cannot communicate with each other.

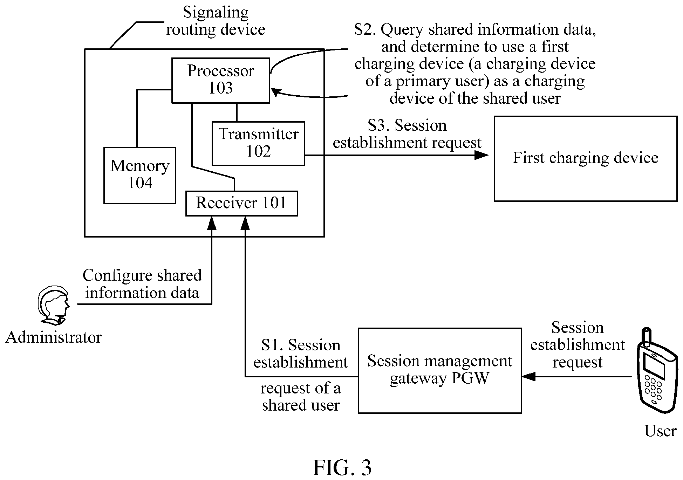

As shown in FIG. 3, the signaling routing device provided in this embodiment of the present invention includes: a receiver 101, a transmitter 102, a processor 103, and a memory 104. Further, referring to FIG. 3, a quota sharing method provided in this embodiment of the present invention includes the following steps.

First, after a quota sharing service between users is set, the receiver 101 receives related data configured by an administrator, that is, the shared information data. Moreover, the shared information data is stored in the memory 104.

The shared information data herein indicates sharing relationship information, a correspondence between an identifier of a primary user and a first charging device corresponding to the primary user, and a correspondence between an identifier of a shared user and a second charging device corresponding to the shared user, and the sharing relationship information indicates that the primary user and the shared user share a same quota. For example, the shared information data may be "primary user A: PCRF 1; shared user B: PCRF 2; and sharing relationship information: the user A is the primary user, the user B is the shared user, and the two users share 2G traffic ".

S 1. The receiver 101 receives a session establishment request of the shared user forwarded by a session management gateway (PGW).

During specific implementation, the session management gateway (PGW) receives the session establishment request of the shared user, and forwards the session establishment request of the shared user to the signaling routing device. Herein, the session establishment request carries the identifier of the shared user. Certainly, the session management gateway receives a session establishment request of another user (such as the primary user or another shared user), and also forwards the session establishment request of the user to the signaling routing device.

S2.the processor 103 queries the shared information data stored in the memory 104, and determines to use the first charging device as a charging device for the shared user.

It should be noted that, the shared information data is queried based on an identifier of a user (shared user), it may be determined that the user is a shared user, and the shared user needs to share a same quota with the primary user. Therefore, it needs to be determined that a charging device corresponding to the shared user is the PCRF of the primary user, that is, the first charging device. Specifically, the shared information data may be queried based on the identifier of the user, and it is determined that the user is a shared user. For example, based on the shared information data, the signaling routing device first queries the shared information data, determines that the quota sharing service is set for the user B and the primary user is A, and then determines that a charging device corresponding to the user B is a charging device for the primary user A.

S3. The transmitter 102 routes the session establishment request to the first charging device, so that the first charging device establishes a first session between the first charging device and the signaling routing device, and the primary user and the shared user share a shared quota.

In this embodiment, the processor 103 may be a central processing unit (English full name: central processing unit, CPU for short).

The transmitter 102 may be implemented by an optical transmitter, an electrical transmitter, a wireless transmitter, or any combination thereof. For example, the optical transmitter may be a small form-factor pluggable (English full name: small form-factor pluggable transceiver, SFP for short) transmitter (English full name: transceiver), an enhanced small form-factor pluggable (English full name: enhanced small form-factor pluggable, SFP+ for short) transmitter, or a 10-GB small form-factor pluggable (English full name: 10 Gigabit small form-factor pluggable, XFP for short) transmitter. The electrical transmitter may be an Ethernet (English full name: Ethernet) network interface controller (English full name: network interface controller, NIC for short). The wireless transmitter may be a wireless network interface controller (English full name: wireless network interface controller, WNIC for short).

The receiver 101 may be implemented by an optical receiver, an electrical receiver, a wireless receiver, or any combination thereof. For example, the optical receiver may be a small form-factor pluggable receiver, an enhanced small form-factor pluggable receiver, or a 10-GB small form-factor pluggable receiver. The electrical receiver may be an Ethernet network interface controller. The wireless receiver may be a wireless network interface controller.

The memory 104 is configured to store program code, and transmit the program code to the processor 101, and the processor 101 executes the following instructions based on the program code. The memory 104 may include a volatile memory (English full name: volatile memory) such as a random access memory (English full name: random-access memory, RAM for short). The memory 104 may also include a non-volatile memory (English full name: non-volatile memory) such as a read-only memory (English full name: read-only memory, ROM for short), a flash memory (English full name: flash memory), a hard disk drive (English full name: hard disk drive, HDD for short), or a solid-state drive (English full name: solid-state drive, SSD for short). The memory 104 may further include a combination of the foregoing types of memories.

According to the quota sharing method provided in the present invention, related data recording a sharing service is stored in an SPS in advance. When receiving a session establishment request of a user forwarded by a PGW, the SPS may query pre-recorded data to determine whether the user is a user for which a quota sharing service is set, further determine, if a quota sharing service is set for the user, that a charging device for a current session of the user is a charging device corresponding to a primary user, and subsequently route the session establishment request of the user to the charging device corresponding to the primary user, so that the charging device corresponding to the primary user charges a quota used by the user, to implement a charging solution in which the user and the primary user share a same quota.

In a preferred embodiment of the present invention, if the sharing service is canceled, that is, if the signaling routing device determines that a quota sharing service between the primary user and the shared user satisfies a revocation condition, it is determined that a charging device corresponding to the shared user is the first charging device. The revocation condition herein is: a sharing relationship between the primary user and the shared user is removed, or available usage of the shared quota is zero, that is, the shared quota is used up.

That is, if the sharing service is revoked, the shared user cannot continue to use a quota paid by the primary user, and the charging device for the shared user needs to charge a quota used by the shared user. Therefore, the charging device corresponding to the shared user is used as a charging device for a current session of the shared user. It should be noted that, when the sharing service is revoked, the SPS receives updated shared information data configured by the administrator, and the update shared information data indicates that the shared user does not share a same quota with the primary user again. Alternatively, if the SPS monitors that the shared quota is used up, the SPS determines that the shared user does not share a same quota with the primary user again.

In another embodiment of the present invention, to ensure that the session is not interrupted when the sharing service is revoked (switched), the signaling routing device sends a session deletion message to the first charging device, so that the first charging device deletes a current session between the first charging device and the shared user, that is, the first session.

Additionally, a session establishment request is further sent to the second charging device, so that the second charging device establishes a second session between the second charging device and the signaling routing device, and the second session has a same session identifier as the first session.

In this way, the session management gateway PGW determines, based on the session identifier, that the current session of the shared user is still an original session, and a service interruption phenomenon does not occur.

Alternatively, to ensure that the session is not interrupted when the sharing service is revoked (switched), the signaling routing device sends session change information to the session management gateway and sends the session establishment request to the second charging device, and receiving the session change information, the session management gateway sends the session deletion message to the first charging device, and the first charging device deletes the first session. Then, the second charging device receives the session establishment request sent by the session management gateway, and establishes a second session between the second charging device and the signaling routing device. The second session has a same session identifier as the first session.

Similarly, the session management gateway PGW determines, based on the session identifier, that the current session of the shared user is still an original session, and a service interruption phenomenon does not occur.

Additionally, it should be noted that, the signaling routing device receives the session establishment request from the shared user forwarded by the session management gateway, and routes the session establishment request to the second charging device. That is, after the sharing service is revoked, the signaling routing device forwards the session request of the shared user to the charging device corresponding to the user.

### Embodiment 1

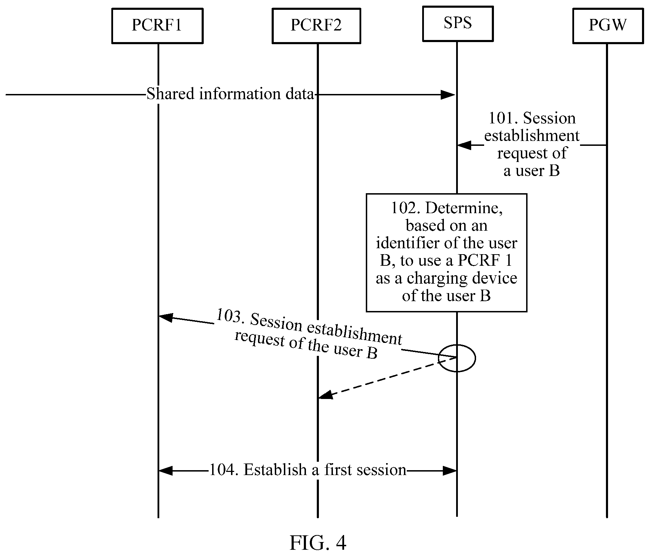

This embodiment of the present invention provides a quota sharing method. An example in which a session management gateway may be a PGW, a signaling routing device may be an SPS, a user A corresponds to a PCRF 1, a user B corresponds to a PCRF 2, and the user A is a primary user is used. Referring to FIG. 4, the method includes the following steps.

101. The PGW receives a session establishment request of the user B, and forwards the session establishment request of the user B to the SPS.

The session establishment request may be a Gx-CCRi message. The session establishment request carries an identifier of the user B, such as B.

Certainly, after receiving a session establishment request of any user, the PGW forwards the session establishment request of the user to the SPS.

Before that, after a quota sharing service between users is set, the SPS receives related data, that is, shared information data. The shared information data herein indicates sharing relationship information, a correspondence between an identifier of the primary user and a charging device corresponding to the primary user, and a correspondence between an identifier of a shared user and a charging device corresponding to the shared user, and the sharing relationship information indicates that the primary user and the shared user share a same quota.

For example, the shared information data may be "primary user A: PCRF 1; shared user B: PCRF 2; and the user A is the primary user, the user B is the shared user, and the two users share 2G traffic ".

102. The SPS receives the session establishment request of the user B, and determines, based on the identifier of the user B, to use the PCRF 1 as a charging device for the user B.

The user A is the primary user, and then the PCRF 1 is a first charging device described in the present invention. The charging device PCRF 2 corresponding to the user B is a second charging device described in the present invention.

During specific implementation, the SPS queries the shared information data based on the identifier of the user B, and determines that the quota sharing service is configured for the shared user, and the shared user needs to share a same quota with the primary user. Therefore, a charging device that performs charging for the shared user needs to be determined, that is, the PCRF of the corresponding primary user. Specifically, the primary charging device may be used as the charging device corresponding to the primary user.

For example, based on the shared information data, the SPS first queries the shared information data, determines that the quota sharing service is set for the user B, and then determines that the charging device PCRF 1 of the primary the user A is a charging device corresponding to a current session of the shared user B.

103. The SPS routes the session establishment request to the PCRF 1.

104. The PCRF 1 establishes a first session between the PCRF 1 and the SPS, so that the user B and the user A share a shared quota.

In this way, the first session between the PCRF 1 and the SPS established in response to the session request of the user B enables the PCRF 1 to perform charging management on a session of the user B, to implement quota sharing between the user B and the primary user.

In the prior art, a plurality of users correspond to a plurality of different charging devices, a PGW routes session establishment request of users to different PCRFs, and then the users are charged by the different PCRFs. In this way, a same charging device cannot charge quotas used by different users, and then a charging solution in which a primary user and a plurality of shared users jointly use a quota, that is, quota sharing cannot be implemented.

In the present invention, an SPS is introduced in conventional networking, and related data recording a sharing service is stored in the SPS in advance. When receiving a session establishment request of a user forwarded by a PGW, the SPS may query pre-recorded data to determine whether the user is a user for which a quota sharing service is set, further determine, if a quota sharing service is set for the user, that a charging device for a current session of the user is a charging device corresponding to a primary user, and subsequently route the session establishment request of the user to the charging device corresponding to the primary user, so that the charging device corresponding to the primary user charges a quota used by the user, to implement a charging solution in which the user and the primary user share a same quota.

In an embodiment of the present invention, if the sharing service is canceled, that is, if the signaling routing device determines that a quota sharing service between the primary user and the shared user satisfies a revocation condition, it is determined that a charging device corresponding to the shared user is the second charging device, that is, a charging device corresponding to the shared user.

The revocation condition is: a sharing relationship between the primary user and the shared user is removed, or available usage of the shared quota is zero, that is, the shared quota is used up.

For example, when a sharing relationship between the primary the user A and the shared user B is removed, or the shared quota is used up, the SPS determines that a charging device corresponding to the user B is the charging device PCRF 2 of the user B.

That is, if the sharing service is revoked, the shared user cannot continue to use a quota paid by the primary user, and the charging device for the shared user needs to charge a quota used by the shared user. Therefore, the charging device corresponding to the shared user needs to be used as a charging device for a current session of the shared user.

Further, the signaling routing device receives the session establishment request from the shared user forwarded by the session management gateway, and routes the session establishment request to the charging device corresponding to the shared user. That is, after the sharing service is revoked, the signaling routing device forwards the session request of the user to the charging device for the user.

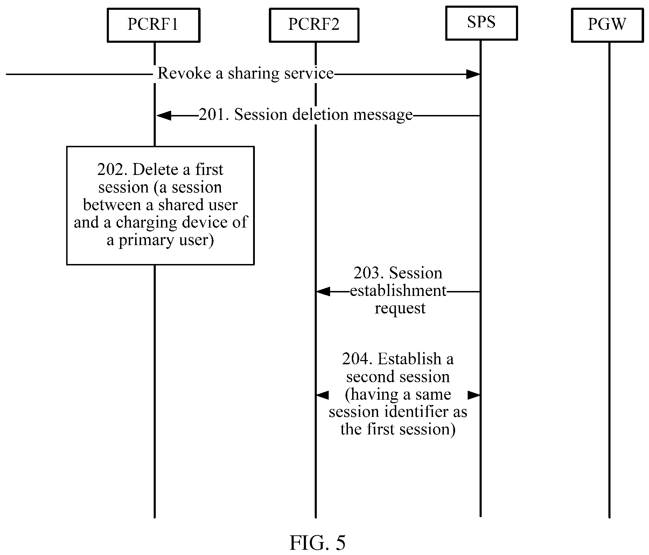

Additionally, when the sharing service is revoked, to ensure that service interruption does not occur, referring to FIG. 5, the method further includes the following steps.

201. The SPS sends a session deletion message to the PCRF 1.

The session deletion message may be a Gx-CCRt message. Certainly, the session deletion message carries a session identifier of a first session, so that the PCRF 1 may delete a session corresponding to the session identifier.

That is, if the shared user establishes a session connection between the shared user and the charging device (the PCRF 1) of the primary user, the shared user and the primary user share a same quota. When a sharing service between the shared user and the primary user is revoked, the shared user cannot continue to share a same quota with the primary user. Therefore, the shared user first needs to send the session deletion message to the charging device for the primary user, to instruct the charging device for the primary user to delete a session between the primary user and the shared user.

202. The PCRF 1 deletes the first session.

The first session is a current session between the PCRF 1 and the shared user (the user B).

203. The SPS sends a session establishment request to the PCRF 2 corresponding to the user B.

The session establishment request may be a Gx-CCRi message. It should be noted that, the session establishment request needs to carry the session identifier of the first session, so that the charging device (the PCRF 2) of the shared user can establish a session the same as the first session after the sharing service is revoked. Therefore, the service of the shared user is not interrupted.

If the sharing service is revoked, the shared user cannot continue to use a quota paid by the primary user, and the charging device for the shared user needs to charge a quota used by the shared user. Therefore, a charging device corresponding to a current session of the shared user needs to be used as a charging device corresponding to the shared user.

204. The PCRF 2 corresponding to the user B establishes a second session between the PCRF 2 and the SPS, where the second session has a same session identifier as the first session.

In this way, the PGW determines, based on the session identifier, that the current session of the shared user is still an original session, and a service interruption phenomenon does not occur.

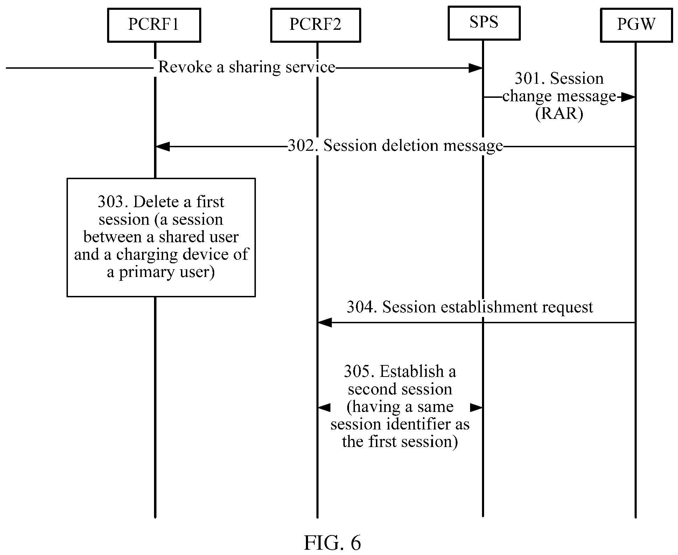

Alternatively, when the sharing service is revoked, to ensure that service interruption does not occur, referring to FIG. 6, the method further includes the following steps.

301. The SPS sends session change information to the PGW.

The session change message herein may be a special notification message such as an RAR.

302. After receiving the session change information, the PGW sends a session deletion message to the PCRF 1.

Similarly, certainly, the session deletion message carries a session identifier of a first session, so that the PCRF 1 may delete a session corresponding to the session identifier.

303. The PCRF 1 deletes the first session.

304. The PGW sends a session establishment request to the charging device PCRF 2 corresponding to the user B.

It should be noted that, the session establishment request needs to carry the session identifier of the first session, so that the charging device (the PCRF 2) of the shared user can establish a session the same as the first session after the sharing service is revoked. Therefore, the service of the shared user is not interrupted.

305. The PCRF 2 establishes a second session between the charging device corresponding to the shared user and the signaling routing device, where the second session has a same session identifier as the first session.

Similarly, the PGW determines, based on the session identifier, that the current session of the shared user is still an original session, and a service interruption phenomenon does not occur.

According to the quota sharing method provided in the present invention, related data recording a sharing service is stored in an SPS in advance. When receiving a session establishment request of a user forwarded by a PGW, the SPS may query pre-recorded data to determine whether the user is a user for which a quota sharing service is set, further determine, if a quota sharing service is set for the user, that a charging device for a current session of the user is a charging device corresponding to a primary user, and subsequently route the session establishment request of the user to the charging device corresponding to the primary user, so that the charging device corresponding to the primary user charges a quota used by the user, to implement a charging solution in which the user and the primary user share a same quota.

Additionally, when the sharing relationship is revoked, signaling interworking may be further performed, a session between the shared user and the charging device for the primary user is deleted, a session between the shared user and the charging device for the shared user is established, and a same session identifier is used, so that the session is not interrupted.

### Embodiment 2

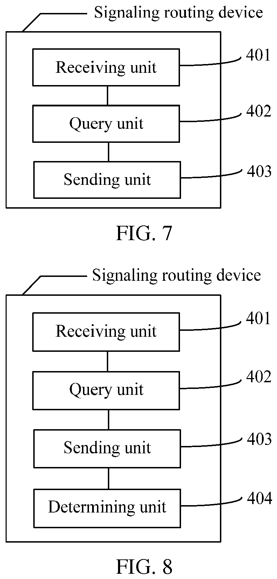

This embodiment of the present invention provides a signaling routing device. As shown in FIG. 7, the signaling routing device includes: a receiving unit 401, a query unit 402, and a sending unit 403.

The receiving unit 401 is configured to receive a session establishment request from the shared user forwarded by a session management gateway, where the session establishment request carries an identifier of the shared user.

Certainly, the receiving unit 401 is further configured to receive shared information data. The shared information data indicates sharing relationship information, a correspondence between an identifier of a primary user and a first charging device corresponding to the primary user, and a correspondence between the identifier of the shared user and a second charging device corresponding to the shared user, and the sharing relationship information indicates that the primary user and the shared user share a same quota.

The query unit 402 is configured to query the pre-stored shared information data, and determine, based on the identifier of the shared user, to use the first charging device as a charging device for the shared user.

The sending unit 403 is configured to route the session establishment request to the first charging device, so that the first charging device establishes a first session between the first charging device and the signaling routing device, and the primary user and the shared user share a shared quota.

As shown in FIG. 8, the signaling routing device further includes a determining unit 404.

The determining unit 404 is configured to: if it is determined that a quota sharing service between the primary user and the shared user satisfies a revocation condition, use the second charging device as a charging device for the shared user.

The sending unit 403 is further configured to send a session deletion message to the first charging device, so that the first charging device deletes the first session; and
send the session establishment request to the second charging device, so that the second charging device establishes a second session between the second charging device and the signaling routing device, where the second session has a same session identifier as the first session.

The sending unit 403 is further configured to send session change information to the session management gateway and send the session establishment request to the second charging device, so that the first charging device deletes the first session, and the second charging device establishes a second session between the second charging device and the signaling routing device, where the second session has a same session identifier as the first session.

The receiving unit 401 is further configured to receive the session establishment request from the shared user forwarded by the session management gateway.

The sending unit 403 is further configured to route the session establishment request to the second charging device.

It should be noted that, the revocation condition is: a sharing relationship between the primary user and the shared user is removed, or available usage of the shared quota is zero.

The signaling routing device provided in the present invention records related data of a sharing service in advance. When receiving a session establishment request of a user forwarded by a PGW, the signaling routing device may query pre-recorded data to determine whether the user is a user for which a quota sharing service is set, further determine, if a quota sharing service is set for the user, that a charging device for a current session of the user is a charging device corresponding to a primary user, and subsequently route the session establishment request of the user to the charging device corresponding to the primary user, so that the charging device corresponding to the primary user charges a quota used by the user, to implement a charging solution in which the user and the primary user share a same quota.

The foregoing descriptions about implementation manners allow a person skilled in the art to understand that, for the purpose of convenient and brief description, division of the foregoing function modules is taken as an example for illustration. In actual application, the foregoing functions can be allocated to different modules and implemented based on a requirement, that is, an inner structure of an apparatus is divided into different function modules to implement all or part of the functions described above. For a detailed working process of the foregoing apparatus, refer to a corresponding process in the foregoing method embodiments, and details are not described herein.

The units described as separate parts may or may not be physically separate, and parts displayed as units may be one or more physical units, may be located in one place, or may be distributed on different places. Some or all of the units may be selected based on actual needs to achieve the objectives of the solutions of the embodiments. In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A quota sharing method, comprising:
receiving, by a signaling routing device, a session establishment request from the shared user forwarded by a session management gateway, wherein the session establishment request carries an identifier of the shared user;
querying, by the signaling routing device, pre-stored shared information data based on the identifier of the shared user, and determining to use a first charging device as a charging device for the shared user, wherein the shared information data indicates sharing relationship information, a correspondence between an identifier of a primary user and a first charging device corresponding to the primary user, and a correspondence between an identifier of a shared user and a second charging device corresponding to the shared user, and the sharing relationship information indicates that a primary user and a shared user share a same quota; and
routing, by the signaling routing device, the session establishment request to the first charging device, so that the first charging device establishes a first session to the signaling routing device, and the primary user and the shared user share a shared quota.

2. The method according to claim 1, wherein
if the signaling routing device determines that a quota sharing service between the primary user and the shared user satisfies a revocation condition, a second charging device is used as a charging device for the shared user.

3. The method according to claim 2, wherein the method further comprises:
sending, by the signaling routing device, a session deletion message to the first charging device, so that the first charging device deletes the first session; and
sending a session establishment request to the second charging device, so that the second charging device establishes a second session between the second charging device and the signaling routing device, wherein the second session has a same session identifier as the first session.

4. The method according to claim 2, wherein
sending, by the signaling routing device, session change information to the session management gateway and sending a session establishment request to the second charging device, so that the first charging device deletes the first session, and the second charging device establishes a second session between the second charging device and the signaling routing device, wherein the second session has a same session identifier as the first session.

5. The method according to claim 2, wherein the method further comprises:
receiving, by the signaling routing device, a session establishment request from the shared user forwarded by the session management gateway, and routing the session establishment request to the second charging device.

6. The method according to any one of claims 2 to 5, wherein the revocation condition is: a sharing relationship between the primary user and the shared user is removed, or available usage of the shared quota is zero.

7. A signaling routing device, comprising:
a receiving unit, configured to receive a session establishment request from the shared user forwarded by a session management gateway, wherein the session establishment request carries an identifier of the shared user;
a query unit, configured to query pre-stored shared information data based on the identifier of the shared user, and determine to use the first charging device as a charging device for the shared user, wherein the shared information data indicates sharing relationship information, a correspondence between an identifier of a primary user and a first charging device corresponding to the primary user, and a correspondence between an identifier of a shared user and a second charging device corresponding to the shared user, and the sharing relationship information indicates that a primary user and a shared user share a same quota; and
a sending unit, configured to route the session establishment request to the first charging device, so that the first charging device establishes a first session to the signaling routing device, and the primary user and the shared user share a shared quota.

8. The signaling routing device according to claim 7, further comprising a determining unit, wherein
the determining unit is configured to: if it is determined that a quota sharing service between the primary user and the shared user satisfies a revocation condition, use the second charging device as a charging device for the shared user.

9. The signaling routing device according to claim 8, wherein
the sending unit is further configured to send a session deletion message to the first charging device, so that the first charging device deletes the first session; and
send a session establishment request to the second charging device, so that the second charging device establishes a second session between the second charging device and the signaling routing device, wherein the second session has a same session identifier as the first session.

10. The signaling routing device according to claim 8, wherein the sending unit is further configured to send session change information to the session management gateway and send a session establishment request to the second charging device, so that the first charging device deletes the first session, and the second charging device establishes a second session between the second charging device and the signaling routing device, wherein the second session has a same session identifier as the first session.

11. The signaling routing device according to claim 8, wherein
the receiving unit is further configured to receive a session establishment request from the shared user forwarded by the session management gateway; and
the sending unit is further configured to route the session establishment request to the second charging device.

12. The signaling routing device according to any one of claims 8 to 11, wherein the revocation condition is: a sharing relationship between the primary user and the shared user is removed, or available usage of the shared quota is zero.
